# EUROPEAN PATENT SPECIFICATION

(11) **EP 3 750 365 B1**
(45) Date of publication and mention of the grant of the patent: **23.09.2026**
(21) Application number: 19704591.7
(22) Date of filing: 07.02.2019
(51) Int. Cl.: H04W 74/0833, H04W 74/0838

(54) **FLEXIBLE ACTIVATION OF EARLY DATA TRANSMISSION**
FLEXIBLE AKTIVIERUNG VON FRÜHER DATENÜBERTRAGUNG
ACTIVATION FLEXIBLE DE TRANSMISSION DE DONNÉES PRÉCOCE

(30) Priority: 09.02.2018 SE 1830047
(43) Date of publication of application: 16.12.2020
(73) Proprietor: Sony Group Corporation, Tokyo 108-0075 (JP)
(72) Inventor: KARLSSON, Peter C., 22738 Lund (SE); MAZLOUM, Nafiseh, 22237 Lund (SE); LJUNG, Rickard, 256 56 Helsingborg (SE)
(74) Representative: Kraus & Lederer PartGmbB
(86) International application number: PCT/EP2019/053025
(87) International publication number: WO 2019/154920

(56) References cited:
- KYOCERA: "Details of Early data transmission for eFeMTC", vol. RAN WG2, no. Prague, Czech Republic; 20171009 - 20171013, 8 October 2017 (2017-10-08), XP051342816, Retrieved from the Internet <URL:http://www.3gpp.org/ftp/Meetings_3GPP_SYNC/RAN2/Docs/> [retrieved on 20171008]
- ERICSSON: "[99bis#53][MTC/NB-IoT] EDT indication via PRACH", vol. RAN WG2, no. Reno, Nevada, USA; 20171127 - 20171201, 17 November 2017 (2017-11-17), XP051371886, Retrieved from the Internet <URL:http://www.3gpp.org/ftp/tsg%5Fran/WG2%5FRL2/TSGR2%5F100/Docs/> [retrieved on 20171117]
- HUAWEI: "Report of email discussion [99bis#55][MTC/NB-IoT] EDT RRC messages", vol. RAN WG2, no. Reno, USA; 20171127 - 20171201, 17 November 2017 (2017-11-17), XP051371982, Retrieved from the Internet <URL:http://www.3gpp.org/ftp/tsg%5Fran/WG2%5FRL2/TSGR2%5F100/Docs/> [retrieved on 20171117]
- QUALCOMM INCORPORATED: "Discussion on some FFSes on EDT", vol. RAN WG2, no. Reno, Nevada; 20171127 - 20171201, 17 November 2017 (2017-11-17), XP051372372, Retrieved from the Internet <URL:http://www.3gpp.org/ftp/tsg%5Fran/WG2%5FRL2/TSGR2%5F100/Docs/> [retrieved on 20171117]
- INTEL CORPORATION: "Early data transmission discussion for eFeMTC and FeNB- IoT", vol. RAN WG2, no. Reno, USA; 20171127 - 20171201, 17 November 2017 (2017-11-17), XP051371560, Retrieved from the Internet <URL:http://www.3gpp.org/ftp/tsg%5Fran/WG2%5FRL2/TSGR2%5F100/Docs/> [retrieved on 20171117]
- KYOCERA: "Details of Early data transmission for eFeMTC", vol. RAN WG2, no. Prague, Czech Republic; 20171009 - 20171013, 8 October 2017 (2017-10-08), XP051342816, Retrieved from the Internet <URL:http://www.3gpp.org/ftp/Meetings_3GPP_SYNC/RAN2/Docs/> [retrieved on 20171008]
- ERICSSON: "[99bis#53][MTC/NB-IoT] EDT indication via PRACH", vol. RAN WG2, no. Reno, Nevada, USA; 20171127 - 20171201, 17 November 2017 (2017-11-17), XP051371886, Retrieved from the Internet <URL:http://www.3gpp.org/ftp/tsg%5Fran/WG2%5FRL2/TSGR2%5F100/Docs/> [retrieved on 20171117]
- HUAWEI: "Report of email discussion [99bis#55][MTC/NB-IoT] EDT RRC messages", vol. RAN WG2, no. Reno, USA; 20171127 - 20171201, 17 November 2017 (2017-11-17), XP051371982, Retrieved from the Internet <URL:http://www.3gpp.org/ftp/tsg%5Fran/WG2%5FRL2/TSGR2%5F100/Docs/> [retrieved on 20171117]
- QUALCOMM INCORPORATED: "Discussion on some FFSes on EDT", vol. RAN WG2, no. Reno, Nevada; 20171127 - 20171201, 17 November 2017 (2017-11-17), XP051372372, Retrieved from the Internet <URL:http://www.3gpp.org/ftp/tsg%5Fran/WG2%5FRL2/TSGR2%5F100/Docs/> [retrieved on 20171117]

## Description

### TECHNICAL FIELD

Various examples of the invention generally relate to facilitating early data transmission in a random access procedure. Various examples of the invention specifically relate to activating or deactivating the early data transmission in accordance with respective control signaling.

### BACKGROUND

In wireless communication systems, a terminal (sometimes also referred to as mobile device or user equipment, UE) and a base station (BS) typically communicate data using a data connection. The data connection is set up between the UE and the network using a random access (RA) procedure. This involves a network access performed by the UE. Then, resources on a spectrum can be allocated to the UE for communicating the data. This is sometimes referred to as resource scheduling. The resource scheduling is facilitated by the data connection.

Triggers for performing the RA procedure may include uplink (UL) data scheduled or queued for transmission and/or receipt of a downlink paging indicative of downlink (DL) data scheduled for transmission and/or a schedule for a DL data transmission. Typically, the RA procedure includes multiple messages, e.g., four messages; RA message 1 in UL direction, RA message 2 in DL direction, RA message 3 in UL direction and RA message 4 in DL direction. Details of such a RA procedure in the 3GPP Long Term Evolution (LTE) framework are described in 3GPP Technical Specifications (TSs) 36.211, 36.231, 36.321, and 36.331. The RA procedure can be used to transition operation of the UE from idle mode to connected mode.

According to reference implementations, the various above-identified processes including network access to resource scheduling can be energy-inefficient and may require significant time. Therefore, latency until communication of the data is increased. This may be particularly relevant for Internet of Things (IOT) devices that are to be optimized regarding energy efficient operation.

To mitigate such issues, early data transmission (EDT) for Rel-15 eMTC and NB-IoT has been discussed. With EDT the UE can reduce the amount of signaling for small data transmissions by including UL payload data into the RA message 3. Alternatively or additionally, the network can transmit DL payload data in the RA message 4.

Payload data is typically defined on a higher layer, e.g., Layer 7 of a transmission protocol stack. Payload data is sometimes referred to as user data or application data. At a point in time at which the RA message 3 is transmitted from the UE to the network or BS, there is no user plane transport bearer for application data set up, i.e., the data connection is not setup. Hence, EDT is a method to include a container of payload data, even before the data connection has been configured.

For example, 3GPP DRAFT, R2-1712639, INTEL CORPORATION, discloses "Early data transmission discussion for eFeMTC and FeNB-IoT", in particular an MME indication to the eNB, which is also received by the UE, whether downlink Early Data Transmission may be used.

However, EDT faces certain restrictions. For example, according to reference implementations, activation of the EDT is static. Therefore, scenarios may be encountered where statically activated or disabled EDT is less favorable in terms of, e.g., quality of service such as latency, spectral efficiency, and/or load imposed on the participating devices.

### SUMMARY

Therefore, a need exists for advanced techniques of EDT. Specifically, a need exists for techniques of EDT which overcome or mitigate at least some of the above-identified restrictions and drawbacks.

This need is met by the features of the independent claims. The features of the dependent claims define embodiments.

The invention is set out in the appended set of claims.

### BRIEF DESCRIPTION OF THE DRAWINGS

FIG. 1 schematically illustrates a BS, a UE, and a wireless link in between the BS and the UE according to various examples.
FIG. 2 schematically illustrates the BS and the UE in greater detail.
FIG. 3 schematically illustrates a cellular network according to various examples.
FIG. 4 schematically illustrates operational modes of a UE according to various examples.
FIG. 5 schematically illustrates a RA procedure of a UE including EDT according to various examples.
FIG. 6 schematically illustrates a RA procedure of a UE including EDT according to various examples.
FIG. 7 schematically illustrates DL control signaling including a control message which is indicative of activation or deactivation of EDT in a RA procedure according to various examples.
FIG. 8 schematically illustrates network-controlled EDT according to various examples.
FIG. 9 is a flowchart of a method according to various examples.

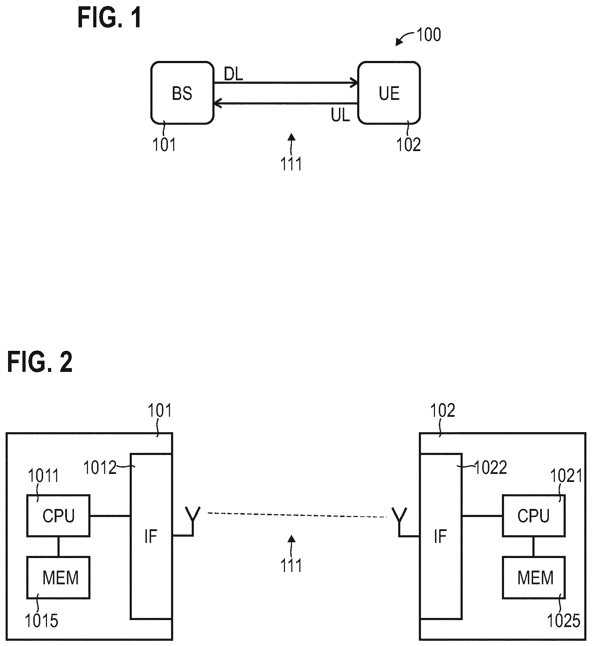

The invention is described by the combination of the embodiments related to figures 2, 6, 8, and 9.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

The techniques described herein may facilitate transmitting and/or receiving (communicating) data between a UE and a BS of a network. For example, DL data and/or UL data may be communicated. For example, payload data that may be associated with a service executed at the UE and/or the network may be communicated. For example, payload data may be communicated between the UE and a packet data network (PDN) to which the network providing access to the UE is connected.

The techniques described herein may be employed in connection with IOT devices. Specifically, the techniques described herein may be employed in connection with Third Generation Partnership Project (3GPP) Machine Type Communication (MTC) devices. The techniques described herein may be employed in connection with 3GPP narrowband IOT (NB-IOT) devices.

Hereinafter, techniques related to a RA procedure of a UE connecting to a network are described. For example, the network may be a cellular network including multiple cells, wherein each cell is defined by one or more BSs. Example network architectures include the 3GPP LTE (4G) or New Radio (5G) architecture. For example, the 3GPP LTE and NR protocols employ a RA procedure including four messages exchanged between the UE and the BS (4-step RA procedure). However, the techniques described herein are not limited to a four step random access procedure. Other initial access procedures are also applicable, including but not limited to UE initiated access procedures with more or less number of signaling steps. The techniques are further not limited to 3GPP cellular networks. Other kinds and types of networks may be implemented, e.g., ad-hoc networks or non-cellular networks. The techniques are applicable to network using both licensed and unlicensed spectrum.

According to examples, in a RA procedure, a UE transmits an UL RA message. The UL RA message includes a RA preamble. The UL RA message which includes the RA preamble is also referred to as RA message 1.

The RA preamble as used herein may be a pattern or signature. The value of the RA preamble may facilitate distinguishing between different UEs. The RA preamble may be selected from a set of candidate preambles, e.g., 64 or 128 candidate preambles. The different candidate preambles may use orthogonal codes. For example, a Zaddoff-Chu sequence may be used for generating the RA preamble. The Zaddoff-Chu sequence may form a base sequence or root sequence. Different cyclic shifts may then be applied to obtain the specific RA preamble. Different UEs may use different cyclic shifts. Code division duplexing is possible. Said selection may occur randomly or non-randomly, e.g., depending on whether a contention based RA procedure or a non-contention based RA procedure is employed. For example, the document 3GPP TSG RAN WG1 #86 bis R1-1609119 discloses techniques associated with RA preamble design for 3GPP NR that could be employed in connection with determining the RA preamble.

In an LTE environment, a UE may use a contention-based RA procedure if it has not been allocated a preamble index. This may happen as part of a procedure known as RRC connection establishment. In this example, the UE may wish to send the BS an RRC message known as an RRC connection request, in which it asks to move from an idle state (RRC_IDLE) to a connected state (RRC_CONNECTED). As no resources are allocated for sending a corresponding request message, the UE randomly chooses a preamble sequence from a pool of candidate preamble sequences, this pool, e.g., being provided by the network. The UE then transmits the selected preamble in RA message 1. There is a risk of contention, if two or more UEs transmit on the same resource blocks using the same preamble sequence.

The BS sends the UE a scheduling command followed by a RA response including an UL grant as RA message 2. Using the UL grant, the UE sends a RRC connection request message (RA message 3). As part of the message, the UE uniquely identifies itself. There is still the risk of contention between the UEs that initiated the procedure, but if one of the transmissions is stronger than the others, then the BS will be able to decode it. The other transmissions will cause interference. The BS sends a RRC connection response message (RA message 4) including an acknowledgement and echoing back the RRC message that the UE transmitted in RA message 3, so it includes the identity of the successful UE. Thus, a contention may be resolved and a data connection may be set up.

As explained with respect to the figures in greater detail hereinafter, transmission of payload data may be accomplished already in the above-described RA procedure. Thus, it is not required to complete set-up of a data connection such as a user-plane default bearer or dedicated bearer prior to communicating the payload data. Transmission of the payload data in the RA procedure is referred to as EDT.

For example, UL payload data may be included in the RRC connection request message (RA message 3), for example multiplexed on the same transmission time interval (TTI). Thus, UL payload data may be communicated from the UE to the BS during the RA procedure. Alternatively or additionally, DL payload data may be communicated during the RA procedure in the RRC response message (RA message 4).

According to various examples, control signaling for activating or disabling EDT is employed. This may facilitate network control of the activation or deactivation of the EDT. According to examples, the network can thereby mandate one or more UEs to activate EDT; the network can thereby mandate one or more further UEs to deactivate EDT.

According to various examples, the control signaling may activate or deactivate UE requests for EDT. Such a scenario may specifically be helpful where, e.g., the UE requests EDT of DL payload data in a RA procedure, prior to implementing EDT of payload data in that RA procedure.

According to various examples described herein, different techniques for activating or deactivating EDT are available. Specifically, the information included in respective control signaling may vary in various examples.

Various implementations of the control signaling:
A first example implementation includes a cell-specific control signaling for EDT on/off switching. With such control signaling, the network may batch-control whether any UEs at all should be allowed to use EDT or not. Hence, with such signaling in off-state, the controlled UEs shall not request EDT. Corresponding cell-specific control signaling can be included in a system information broadcasted in the respective cell. The respective command could be valid for all UEs or for a certain type/category of UEs. The control signaling may indicate that the cell supports EDT for the UEs. The control signaling can allow UEs to request EDT.

A second example implementation includes UE-specific control signaling for EDT on/off switching. This implementation is somewhat comparable to the cell-specific control signaling, but the control signaling is implemented per-UE or for a group of UEs. This control signaling could be implemented as RRC signaling, e.g. upon a network registration or upon a UE transitioning from an active state to an inactive/suspend state or similar. One-to-one control signaling between the respective UE and the respective BS is possible.

Using the control signaling, the network can indicate to controlled UEs that the UE is to use EDT for any upcoming transmission. The respective control message could be time limited, i.e., it could include a timer value, during which no connection attempts / RA procedures are allowed unless they use EDT. Such a timeout time duration for mandatory EDT helps to mitigate network congestions; as such, the control signaling may be referred to as congestion control signaling. Respective control signaling may be implemented using a connection release message or in a RRC reconfiguration message. Such messages generally disconnect or modify a data connection previously set-up by a RA procedure. Hence, e.g., prior to or upon transitioning a UE into idle mode, the network can indicate that if the UE wishes to initiate a new data transmission within a given time period, the UE will only be allowed to do so via EDT. On the other hand, access restrictions for setup of the data connection between the UE and the network may be indicated. This helps to gracefully limit access for UEs upon high network load conditions, since it limits the required network resources for keeping the UE with access capability in the cell.

The respective control message could be indicative of a restriction of EDT with respect to a maximum amount of payload data to transmit, or a maximum amount of EDT accesses per time unit. For example, the control message may be indicative of a threshold count and/or a threshold rate of the EDT. A UE which would need to transmit more payload data than what is possible within an EDT transmission could thereby be ensured not to attempt multiple access in a row, but instead be limited to either abstain from connecting to the network or reduce the payload data size before connection.

Radio link performance levels/channel quality may be used to control activation / deactivation of EDT. A respective ruleset can be defined. This is based on the finding that certain network conditions could make the use of EDT more or less favorable. For example, the ruleset could be linked to certain radio link performance parameters or, generally, a channel quality. As a further example, the ruleset may define activation or deactivation of EDT depending on the amount of data to be transmitted. For example, where there is a small amount of UL payload data, the EDT may be activated; while EDT may be deactivated for a large amount of payload data. As a still further example, the use of high level of coverage enhancement (CE) could impact whether the network activates or deactivates EDT. Specifically, the activation or deactivation of EDT could be linked to a certain CE level using the ruleset, so that the targeted CE level acts as a trigger to whether the ED may be employed or not. The CE level defines the numbers of packet repetitions.

As a general rule, a set of features where a comparably large coverage is achieved is referred to as CE. CE is envisioned to be applied for MTC and NB-IOT, sometimes also referred to as NB-LTE. A key feature of CE is to implement multiple transmission repetitions of encoded data. Here, each repetition may include the same redundancy version of the encoded data. The repetitions may be "blind", i.e., may not in response to a respective retransmission request that may be defined with respect to a Hybrid Acknowledgment Repeat Request protocol (HARQ protocol). Rather, repetitions according to CE may be preemptive. Examples are provided by the 3GPP Technical Report (TR) 45.820 version 13.0.0 (2015 - 08), section 6.2.1.3. By employing CE, a likelihood of successful transmission can be increased even in scenarios of poor conditions of communicating on a corresponding wireless link, by achieving a better aggregated signal to noise and interference ratio using the multiple transmissions than what is achieved using a single packet transmission. Thereby, the coverage of networks can be significantly enhanced - even for low transmission powers as envisioned for the MTC and MB-IOT domain. According to examples, using CE, the encoded payload data is redundantly communicated - e.g., employing EDT - using a plurality of repetitions of the respective RA message. Hence, the same encoded version of the data may be redundantly communicated a number of times according to various examples. The count of the repetitions defines the CE level. Each repetition of the plurality of repetitions can include the data encoded according to the same redundancy version, e.g., redundancy version 0 or redundancy version 1, etc.. Then, it is possible to combine the plurality of repetitions of the encoded data. Such combination may be implemented in analog domain, e.g., in the baseband. The combination yields a combined signal. Then, the decoding of the encoded data can be based on the combined signal. Thus, by aggregating the received information across the multiple repetitions, the probability of successfully decoding of the encoded data increases. Such techniques of CE may find particular application in the framework of the IOT technology, e.g., according to 3GPP MTC or NB-IOT. Here, typically, the transmitting UE implements a comparably low transmit power. Due to the multiple repetitions of the encoded data, nonetheless, a sufficiently high likelihood of successfully receiving and decoding the encoded data is provided for. As one specific implementation of the ruleset described above, a CE level dependent ruleset may determine that EDT may only be used when the repetition number is 1, meaning that the concept of CE is not used.

By using techniques as described herein, efficient communication of payload data between the UE and the network can be achieved. Specifically, the communication of the payload data can be tailored to the particular circumstances experienced, e.g., in terms of the channel quality, load at the network, spectral occupation, etc.. Therefore, the overall performance can be optimized.

FIG. 1 schematically illustrates a wireless communication network 100 that may benefit from the techniques disclosed herein. The network 100 may be a cellular network including multiple cell, each cell associated with one or more BSs. The network may be a 3GPP-standardized network such as 3G, 4G LTE, or upcoming 5G NR. Other examples include point-to-point networks such as Institute of Electrical and Electronics Engineers (IEEE)-specified networks, e.g., the 802.11x Wi-Fi protocol or the Bluetooth protocol. Further examples include Multefire, 3GPP NB-IOT or eMTC networks.

The network 100 includes a BS 101 and a UE 102. For example, the UE 102 may be selected from the group including: a smartphone; a cellular phone; a table; a notebook; a computer; a smart TV; a MTC device, an IOT device; a sensor; an actuator; etc.

An MTC or IOT device is typically a device with a low to moderate requirement on data traffic volumes and loose latency requirements. Additionally, communication employing MTC or IOT devices should achieve low complexity and low costs. Further, energy consumption of an MTC or an IOT device should be comparably low in order to allow battery-powered devices to function for a comparably long duration: The battery life should be sufficiently long. For example, the IOT device may use NB-IOT.

A wireless link 111 is established between the BS 101 and the UE 102. The wireless link 111 includes a DL link from the BS 101 to the UE 102; and further includes an UL link from the UE 102 to the BS 101. Time-division duplexing (TDD), frequency-division duplexing (FDD), space-division duplexing (SDD), and/or code-division duplexing (CDD) may be employed for mitigating interference between UL and DL. Likewise, TDD, FDD, SDD, and/or CDD may be employed for mitigating interference between multiple UEs communicating on the wireless link 111 (not shown in FIG. 1). This helps to implement non-contention-based or contention-free communication. To this end, time-frequency radio resources (hereinafter, simply referred to as resources) may be used.

FIG. 2 schematically illustrates the BS 101 and the UE 102 in greater detail. The BS 101 includes a processor 1011 and an interface 1012. The interface 1012 may include one or more antennas. The interface 102 may be configured to communicate on the wireless link 111. The BS 101 further includes a memory 1015, e.g., a non-volatile memory. The memory may store program code that can be executed by the processor 1011. Executing the program code may cause the processor 1011 to perform techniques with respect to: participating in a RA procedure with the UE 102; controlling activation and deactivation of EDT; control signaling to activate/deactivate EDT; etc..

The UE 102 includes a processor 1021 and an interface 1022. The interface 1022 may include one or more antennas. The interface 1022 may be configured to communicate on the wireless link 111. The UE 102 further includes a memory 1025, e.g., a non-volatile memory. The memory 1025 may store program code that can be executed by the processor 1021. Executing the program code may cause the processor 1021 to perform techniques with respect to: participating in a RA procedure with the BS 101; activating and deactivating EDT, e.g., in accordance with DL control signaling, etc.

For example, the UE 102 may be one of the following: a smartphone; a mobile phone; a laptop; a tablet computer; a smart TV; an IOT device; an MTC device; etc..

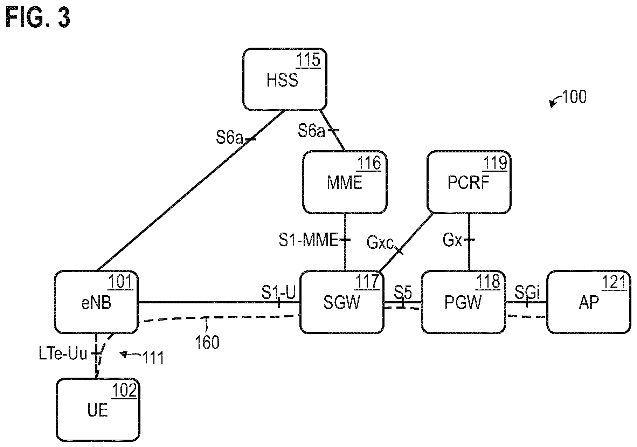

FIG. 3 illustrates aspects with respect to the architecture of a cellular network 100 according to some examples implementations. In particular, the cellular network 100 according to the example of FIG. 3 implements the 3GPP LTE architecture, sometimes referred to as evolved packet system (EPS). This, however, is for exemplary purposes only. In particular, various scenarios will be explained in the context of the wireless link 111 between the UE 102 and the BS 102 operating according to the 3GPP LTE radio access technology (RAT) for illustrative purposes only. Similar techniques can be readily applied to various kinds of 3GPP-specified RATs, such as Global Systems for Mobile Communications (GSM), Wideband Code Division Multiplex (WCDMA), General Packet Radio Service (GPRS), Enhanced Data Rates for GSM Evolution (EDGE), Enhanced GPRS (EGPRS), Universal Mobile Telecommunications System (UMTS), and High Speed Packet Access (HSPA), and corresponding architectures of associated cellular networks. The network 100 may be operating according to the 3GPP NR protocol. A further particular example is the 3GPP NB-IOT RAT. The 3GPP NB-IOT RAT may be based on the 3GPP LTE RAT, i.e., the Evolved UMTS Terrestrial Radio Access (E-UTRA). Further, the NB-IOT RAT may be combined with the EPS as illustrated in FIG. 3. The various examples disclosed herein may be readily implemented for the 3GPP NB-IOT RAT, alternatively or additionally. Similarly, the techniques described herein may be employed for MTC. Other examples include other types of networks, e.g., Institute of Electrical and Electronics Engineers (IEEE) 802.11X Wireless Local Area Network, Bluetooth or Zigbee.

The UE 102 is registered to the network 100. In the example of FIG. 3, the UE 102 is connected to the network 100 via the wireless link 111 to a BS 101 of the cellular network 100. The BS 101 and the UE 102 implement the evolved UMTS terrestrial radio access technology (E-UTRAN); therefore, the BS 101 is labeled evolved node B (eNB) in FIG. 3. In NR, the BS 101 is known as g Node B (gNB).

Communication on the wireless link 111 can be in UL and / or DL direction. The BS 101 is connected with a gateway node implemented by a serving Gateway (SGW) 117. The SGW 117 may route and forward payload data and may act as a mobility anchor during handovers of the UE 102.

The SGW 117 is connected with a gateway node implemented by a packet data network Gateway (PGW) 118. The PGW 118 serves as a point of exit and point of entry of the cellular network 110 for data towards a packet data network (PDN; not shown in FIG. 3): for this purpose, the PGW 118 is connected with an access point node 121 of the packet data network. The access point node 121 is uniquely identified by an access point name (APN). The APN is used by the UE 102 to seek access to the PDN.

In a 3GPP NR scenario, the SGW 117 and PGW 118 functionality may be implemented by a user plane function (UPF).

The PGW 118 can be an endpoint of an end-to-end data connection 160 for packetized payload data of the UE 102. The data connection 160 may be used for communicating payload data of a particular application. Different applications/services may use different data connections 160 or may share, at least partly, a certain data connection 160. The data connection 160 may be implemented by one or more bearers which are used to communicate service-specific data. An EPS bearer is characterized by a certain set of quality of service parameters indicated by the QoS class identifier (QCI).

The data connection 160 may be, at least partly, defined on a Layer 2 or Layer 3 of a transmission protocol stack implemented by the BS 101 and the UE 102 for communicating on the wireless link 111. For example, in connection with the 3GPP LTE E-UTRAN, the data connection 160 may be implemented on the Radio Resource Control (RRC) layer. The data connection 160 may be established using a RA procedure. The data connection 160 may be established when operating the UE 102 in a connected mode; but may be unavailable when operating the UE 102 in a disconnected mode.

A control layer of the core network includes a mobility management entity (MME) 116. The MME 116 functionality may be implemented by an Access and Mobility Management Function (AMF) and the Session Management Function (SMF) in a 3GPP NR framework.

A home subscriber server (HSS) 115 includes a repository that contains user- and subscriber-related information such as authentication and subscription information. In 3GPP NR, such functionality may be implemented by the Authentication Server Function (AUSF) and/or the Unified Data Management (UDM) functionality.

A Policy and Charging Rules Function (PCRF) implements policy control to thereby facilitate a certain QoS. The respective function is implemented by the Policy Control Function (PCF) in the 3GPP NR framework.

The MME 116 handles mobility and security tasks such as paging and access credentials. The MME 116 also keeps track of the operational mode of the UE 102, e.g., whether the UE 102 operates in a connected or disconnected mode. The MME 116 is the termination point of the non-access stratum (NAS) connection, i.e., a control connection implemented on the layer above the RRC layer.

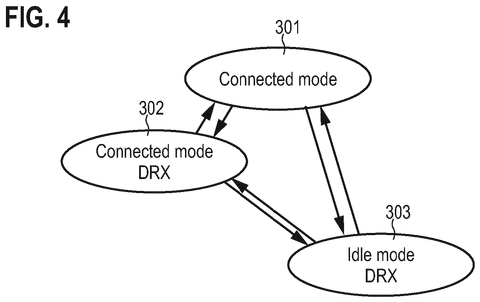

The MME 116 may control paging functionality. Hence, there may be a registry maintained by the MME 116 which identifies whether a certain UE is pageable or un-pageable. This may depend on the particular operational mode of that UE, e.g., whether the UE 102 is operated in connected mode or disconnected mode. The operational mode, in turn, may be associated with the presence or absence of the data connection 160. FIG. 4 illustrates aspects in connection with such operational modes.

FIG. 4 illustrates aspects with respect to different operational modes 301-303 in which the UE 102 can operate. In all modes illustrated in a state diagram in FIG. 4, the UE 102 may be registered with the network 100, i.e., may be EMM-REGISTERED in 3GPP LTE or MM-REGISTERED in 3GPP NR. Thus, a corresponding entry may be kept at the MME 116.

In connected mode 301, the data connection 160 is set up. For example, a default bearer and optionally one or more dedicated bearers may be set up between the UE 102 and the network 100. Setup of the data connection includes a RA procedure.

In order to reduce the power consumption, it is then possible to transition from the connected mode 301 to a connected mode 302 which employs a discontinuous reception (DRX) cycle (Connected mode DRX).

The DRX cycle includes on durations and off durations (not illustrated in FIG. 4). During the off durations, an interface of the UE 102 is unfit to receive data; e.g., an analog and/or digital frontend may at least be partially powered down. The timing of the DRX cycle is synchronized between the UE 102 and the BS 101 such that the BS 101 can align any DL transmission with the on durations of the connected mode DRX cycle. The data connection 160 is maintained established in mode 302 even during the off durations. The data connection 160 is not released.

To achieve a further power reduction, it is possible to transition into one or more disconnected mode 303 also referred to as idle mode 303. Here, the data connection 160 is released and not set up.

The idle mode 303 is, again, associated with an idle mode DRX cycle of the UE 102. However, during the on durations of the DRX cycle in idle mode 303, the interface of the UE 102 is only fit to receive paging. For example, this may help to restrict the frequency bandwidth that needs to be monitored by the UE during the on durations of the DRX cycles in idle mode 303. This may help to further reduce the power consumption - e.g., if compared to the connected mode 302.

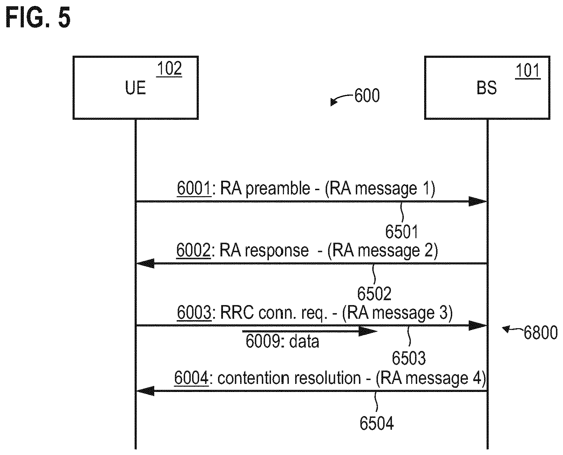

A transition from the idle mode 303 to one of the connected modes 301, 302 may involve a RA procedure. Details of the RA procedure are illustrated in FIG. 5.

FIG. 5 schematically illustrates aspects with respect to a RA procedure 600 according to various examples. FIG. 5 is a signaling diagram of communication between the UE 102 and the BS 101.

In cellular communication protocols, defined, e.g., by the 3GPP in the LTE or NR framework, a connection setup procedure such as the RA procedure of FIG. 5 may include communication of several messages. Prior to initiating the RA procedure 600, the UE may periodically listen to information blocks broadcasted by one or more BSs of the network. For example, the broadcasted information blocks may include such information as a cell identity of the broadcasting BS. A connection setup attempt from a UE 102 may then be initiated using the RA procedure 600, which may include a non-contention based procedure or a contention based procedure. In typical case, the contention based procedure may start with a four step handshake protocol as shown in FIG. 5.

At 6501, based on the broadcasted information, the UE 102 may transmit a randomly selected RA preamble 6001 to the BS, in a respective RA message 1. This RA message 1 may be indicative of a temporary identity of the UE 102.

In response to transmitting the preamble, the UE 102 may receive, at 6502, a RA response (RAR) message 6002 (also known as RA message 2) including for example a new temporary identity for the UE 102, timing adjustment information, and a scheduling grant for UL resources. The scheduling grant may be addressed to the UEs 102 RA Radio Network Temporary Identity (RA-RNTI).

Using these UL resources, the UE can send, at 6503, a RRC connection request 6003 (also known as RA message 3). For example, in the context of the 3GPP LTE protocol, the connection request may be native to the RRC layer of the transmission protocol stack, i.e., Layer 3 according to the Open System Interface (OSI) model. The RRC connection request 6003 may include a connection establishment cause.

In response to the RRC connection request 6003, the UE 102 may receive, at 6504, a contention resolution message 6004 (also known as RA message 4) to ensure the right UE is addressed. This message may also be referred to as RRC connection request response message 6004. This finalizes set-up of the data connection 160.

If the connection attempt of the UE 102 to the network 100 is successful, the data connection 160 can be established. Then, wireless communication of payload UL data and/or payload DL data along the data connection 160 can commence.

There are various trigger criteria conceivable for the RA procedure 600. Examples include reception of a network paging message by the UE 102 or reception of a wake-up signal. Further examples include UL payload data scheduled or queued for transmission to the network 100.

In the scenario of FIG. 5, the RA procedure 600 is configured for EDT 6800 of UL payload data 6009; hence the RA procedure 600 includes EDT 6800. As illustrated in FIG. 5, the UL payload data 6009 is piggybacked to the RA message 3 6003, at 6503.

Alternatively or additionally, EDT 6800 may also include piggybacking DL payload data to the RA message 4 6004 at 6504 (not illustrated in FIG. 5).

As a general rule, various options of piggybacking the payload data to at least one of the control messages 6003, 6004 of the RA procedure 600 are available. For example, the payload data may be included in a NAS information field of the respective control message 6003, 6004, e.g., for a payload data via the control plane scenario.

The scenario of FIG. 5 may rely on CE. Here, at least some of the messages 6001 - 6004 may be repeatedly transmitted in accordance with a given CE level. Typical CE levels are in the range of 50 - 5000 repetitions. Specifically, the CE level may apply to the EDT of payload data. In the scenarios described herein, the CE level employed may vary, depending on various parameters. CE may help to tailor the balance between signaling overhead and reliable transmission.

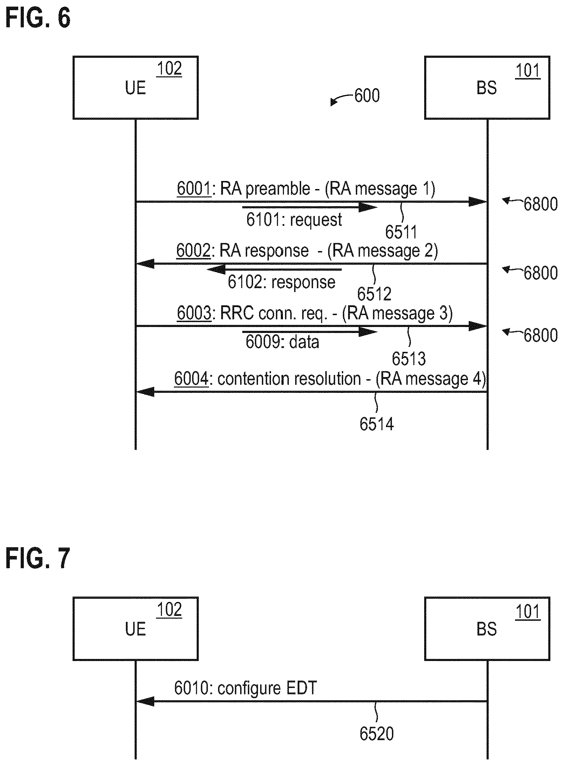

FIG. 6 schematically illustrates aspects with respect to a RA procedure 600 according to various examples. FIG. 6 is a signaling diagram of communication between the UE 102 and the BS 101.

The scenario FIG. 6 generally corresponds to the scenario of FIG. 5. In the scenario of FIG. 6, the EDT 6800 also includes an UL request 6101 included, at 6511, in the RA message 1 6001. Further, in the scenario of FIG. 6, the EDT 6800 also includes a DL acknowledgement 6102 of the UL request 6101. The DL acknowledgement 6102 is included in the RA message 2 6002, at 6502. The DL acknowledgement 6102 may include a positive acknowledgement indicator or negative acknowledgement indicator. For example, if the DL acknowledgement 6102 includes a positive acknowledgement indicator, then, at 6513, the UL payload data 6009 is piggybacked to the RA message 3 6003. Such transmission of payload data 6009 may also be suppressed or aborted in case the DL acknowledgement 6102 includes a negative acknowledgement indicator. By means of the UL request 6101 and the DL acknowledgement 6102, it is possible to activate/deactivate the transmission of the payload data on a case-by-case basis, for each RA procedure 600. Optionally, it would be possible to implement a request for resources using the UL request 6101, to thereby adjust scheduling of resources for the RA message 3 6003 in case of UL payload data 6009 and/or adjust scheduling of resources for the RA message 4 6004 in case of DL payload data. A general concept for such a request 6101 is described in 3GPP TSG RAN WG2 Meeting #99, R2-1709194.

According to various examples, activation and deactivation of EDT - i.e., of the transmission of the payload data 6009 and/or transmission of the UL request 6101 - can be network-controlled. Corresponding techniques are described in connection with FIG. 7.

FIG. 7 schematically illustrates aspects with respect to selective activation and deactivation of the EDT. FIG. 7 is a signaling diagram of communication between the UE 102 and the BS 101.

At 6520, DL control signaling of a DL control message 6010 is implemented. The BS 101 transmits the DL control message 6010 and the UE 102 receives the DL control message 6010. The DL control message 6010 is indicative of activation or deactivation of the EDT in a RA procedure 600. Then, it is possible to selectively employ the EDT, in accordance with the DL control signaling.

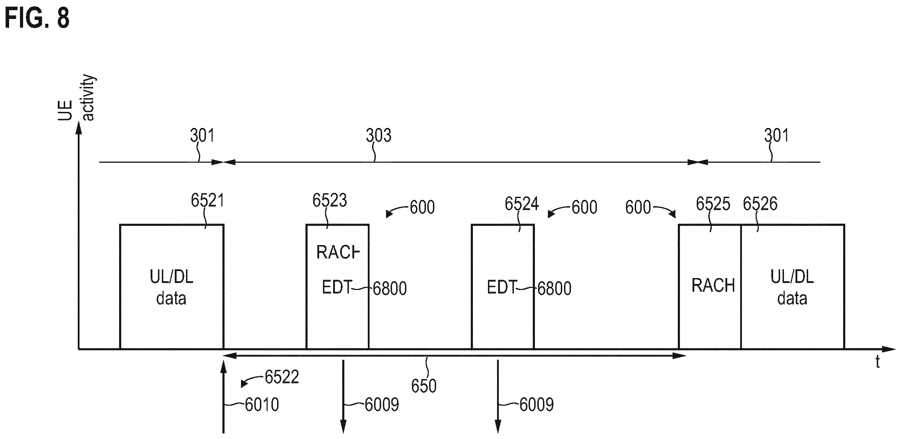

The DL control signaling at 6520 is not part of the RA procedure 600. As a general rule, various options are available for implementing the DL control signaling at 6520. In one example, the DL control signaling may be cell specific for the cell of the network 100 associated with the BS 101. Thereby, coherent control of the EDT across the various UEs camping on the respective cell may be achieved. Further, control signaling overhead can be limited. In one example scenario, the control message 6010 could be included in a broadcast of system information block. In a further example, it would be possible that the DL control signaling at 6520 is UE-specific for the UE 102. Thereby, tailored control of the EDT for the UE 102 can be implemented. Specifically, EDT can be controlled differently for different UEs camping on the respective cell. This allows for flexible traffic shaping. For example, the UE-specific DL control signaling at 6520 may include transmission of a UE-specific control message 6010, e.g., in a one-to-one communication. The control message 6010 could be a Layer 3 RRC control message. A corresponding scenario is illustrated in FIG. 8.

FIG. 8 schematically illustrates aspects with respect to activity of the UE 102 as a function of time. Specifically, FIG. 8 plots the UE activity as a function of time.

Initially, at 6521, the UE 102 operates in connected mode 301, i.e., the data connection 160 is established (cf. FIGs. 3 and 4). Then, using the data connection 160, UL payload data 6009 and/or DL payload data is transmitted and/or received (communicated).

Towards the end of operating the UE 102 in connected mode 301, the DL control message 6010 is communicated and, in particular, received by the UE 102. Thus, the DL control message 6010 may be communicated while the UE 102 is operated in connected mode 301. For example, the control message 6010 may be a UE-specific control message. For example, the UE-specific control message may be communicated on a physical control channel associated with the data connection 160, e.g., a Physical DL Control Channel (PDCCH) in a 3GPP NR or LTE scenario. Generally speaking, the UE-specific control message may be a Layer 3 control message of a corresponding Open Systems Interface (OSI) transmission protocol stack; such a Layer 3 control message may be implemented by a RRC control message in a 3GPP NR or LTE scenario.

In the scenario of FIG. 8, the control message 6010 is communicated in connection with the release of the data connection 160, i.e., when transitioning from the connected mode 301 to the idle mode 303 (cf. FIG. 4). The control message 6010 is communicated when reconfiguring the data connection 160. Corresponding implementations in the 3GPP NR or LTE scenario include the RRC Connection Release and RRC Connection Reconfiguration message.

As a general rule, the DL control message 6010 may be transmitted prior to any RA procedure for which EDT 6800 is controlled by the DL control message 6010. Thereby, prospective control of the activation or deactivation of the EDT is achieved.

In the scenario of FIG. 8, at 6523 and 6524, a RA procedure 600 including EDT 6800 is performed. Payload data 6009 is transmitted by the UE 102.

In the scenario of FIG. 8, control of the activation or deactivation of the EDT 6800 is prospective and implemented for a certain timeout time duration 650. The timeout time duration is associated with a temporal validity of the EDT control provided by the control message 6010. For example, the control message 6010 could deactivate EDT for the timeout time duration 650 (not illustrated in FIG. 8). For example, the control message 6010 could activate EDT for the timeout time duration (illustrated in FIG. 8). Generally, the timeout time duration 650 may be preconfigured or an indicator indicative of the timeout time duration may be included in the control message 6010. It would be possible that the control message 6010 triggers mandatory EDT for the timeout time duration 650. Hence, establishment of the data connection 160 may be prohibited for the timeout time duration 650. Rather, EDT 6800 is to be relied upon for any transmission of payload data 6009. Thereby, access restrictions for set up of the data connection 160 can be indicated by the control message 6010. Hence, the RA procedure 600 at 6523 and 6524 may not be implemented for the purpose of setting up the data connection 160; but rather for the purpose of implementing the EDT 6800. Thereby, traffic shaping and soft access restrictions can be implemented, because a certain amount of data can be communicated using EDT.

As a general rule, beyond such explicit activation or deactivation of the EDT 6800, it would also be possible that the control message 6010 includes one or more rule sets. Such rule sets may define activation or deactivation of the EDT 6800 in a parametrized manner. Hence, one or more parameters can be taken into account by the UE 102 when activating or deactivating the EDT; the rule set hence may define the general framework or constraints of the activation or deactivation. Such a implementation using a rule set helps to tailor the activation or deactivation based on any time varying parameter, e.g., channel quality, CE level, etc..

For example, it would be possible that the control message 6010 is indicative of a rule set for activation or deactivation of the EDT, the rule set depending on a channel quality. In such a scenario, it would be possible that the rule set specifies a threshold channel quality; then, the instantaneous channel quality - e.g., measured by the UE 102 based on a received signal strength, etc. - can be compared with the threshold channel quality; depending on this comparison, EDT 6800 may be either activated or deactivated. As will be appreciated, then, with variation of the channel quality, EDT may be activated or deactivated over the course of time. This facilitates situation-aware traffic shaping.

In a further example, the rule set may alternatively or additionally depend on the CE level for the repetitive data transmission. For example, the rule set may specify a threshold CE level; then, the instantaneous CE level - e.g., set by the UE 102 based on the channel quality - can be compared with the threshold CE level; depending on this comparison, EDT may be either activated or deactivated. As will be appreciated, then, with variation of the CE level, EDT may be activated or deactivated over the course of time. This facilitates situation-aware traffic shaping.

In yet a further example, the rule set may alternatively or additionally depend on an amount of UL payload data. For example, if the amount of UL payload data queued for transmission is smaller than a first threshold and/or larger than a second threshold, EDT may be either activated or deactivated. This facilitates situation-aware traffic shaping.

In various examples, it would be possible that the control message 6010 is indicative of a threshold count and/or a threshold rate of the EDT. For example, the threshold count may specify a maximum number of EDT occasions throughout the timeout time duration 650. Thereby, it is possible to limit the amount of resources occupied by the UE 102, but still give the UE 102 certain flexibility to transmit prioritized UL payload data 6009. Alternatively or additionally to such a threshold count, it would also be possible that the control message 6010 is indicative of a threshold rate of the EDT. Thereby, the EDT occasions per time unit can be restricted. This also helps to limit the amount of resources occupied by the UE 102.

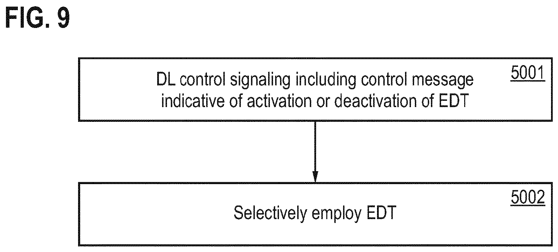

FIG. 9 is a flowchart of a method according to various examples. For example, the method according to FIG. 9 could be executed by the control circuitry 1011, 1015 of the BS 101. It would also be possible that the method according to FIG. 9 is executed by the control circuitry 1021, 1025 of the UE 102.

At block 5001, DL control signaling is implemented to convey a control message. Block 5001 may include transmitting the control message and/or receiving the control message. For example, the control message 6010 (cf. FIG. 7 and FIG. 8) could be communicated in block 5001.

The control message is indicative of activation or deactivation of EDT. This may be a prospective control of the EDT. Hence, for subsequent RA procedures, EDT may be activated or deactivated.

The DL control signaling may be cell-specific for a cell associated with the transmitting BS. Here, the DL control signaling may include transmission of a broadcasted information block. This information block may implement the control message. An information element of the information block may implement the control message. In other scenarios, the DL control signaling may be UE-specific. Then, the DL control signaling is transmitted in a one-to-one connection between the BS and the UE.

A Layer 3 control signaling is implemented. Different information may be conveyed by the control message. For example, mandatory EDT may be triggered, thereby complementing access restrictions for set up of a user-plane data connection, e.g., the data connection 160 (cf. FIG. 3). In other examples, the control message may be indicative of explicit deactivation of the EDT.

The control message is implicitly indicative of activation or deactivation of the EDT. This is achieved by using a rule set. The rule set may be dependent on one or more parameters. Then, specific values of the one or more parameters can be checked by the UE, at the time when EDT may become appropriate. Example parameters include channel quality, CE level, size of payload data, et cetera.

In any case, at block 5002, EDT is either employed or not employed, in accordance with the control message.

Although the invention has been shown and described with respect to certain preferred embodiments, equivalence and modifications will occur to others skilled in the art upon reading and understanding of the specification. The present invention includes all such equivalence and modifications and is limited only by the scope of the appended claims. For illustration, above, various scenarios have been described in which EDT is employed for transmission of UL payload data. Likewise, it would be possible to employ EDT for transmission of DL payload data.

A further illustration, well above various scenarios have been described in the context of a 3GPP LTE scenario, similar techniques may be readily applied for other types of networks such as Multefire or 3GPP NR scenario.

## Claims

1. A method, comprising:
- downlink control signaling (6520) between a network (100, 101) and a terminal (102), said downlink control signaling (6520) comprising a control message (6010) indicative of activation or deactivation of early-data-transmission (6800) in a random access procedure (600) of the terminal (102),
wherein said downlink control signaling (6520) is transmitted in a one-to-one transmission,
wherein
the control message (6010) is a Layer 3 control message communicated upon release or reconfiguration of a user-plane data connection (160) between the terminal (102) and the network (100, 101), and
wherein the control message (6010) is indicative of a rule set for activation or deactivation of the early-data-transmission (6800); and
- in accordance with the rule set for activation or deactivation of the early-data-transmission (6800): selectively employing the early-data-transmission (6800).

2. The method of claim 1,
wherein the Layer 3 control message is an RRC control message.

3. The method of claim 1 or 2,
wherein the control message (6010) triggers mandatory early-data-transmission (6800) at least for a timeout time duration (650).

4. The method of any one of claims 1 to 3,
wherein the control message (6010) is indicative of an access restriction for setup of a user-plane data connection (160) between the terminal (102) and the network (100, 101).

5. The method of any one of the preceding claims,
wherein the control message (6010) is indicative of a rule set for activation or deactivation of the early-data-transmission (6800) which depends on a channel quality.

6. The method of any one of the preceding claims,
wherein the control message (6010) is indicative of a rule set for activation or deactivation of the early-data-transmission (6800) which depends on a coverage enhancement level for repetitive data transmission.

7. The method of any one of the preceding claims,
wherein the control message (6010) is indicative of a rule set for activation or deactivation of
the early-data transmission which depends on an amount of uplink payload data (6009).

8. The method of any one of the preceding claims,
wherein the control message (6010) is indicative of at least one of a threshold count and a threshold rate of the early-data-transmission (6800).

9. The method of any one of the preceding claims,
wherein the early-data-transmission (6800) comprises an uplink request (6101) for the transmission of payload data (6009),
wherein the early-data transmission comprises a downlink acknowledgement (6102) of the uplink request.

10. The method of any one of claims 1 - 9,
wherein said downlink control signaling (6520) is terminal specific for the terminal (102).

11. The method of claims 1 or 2,
wherein the control message (6010) is indicative of activation or deactivation of the early-data-transmission (6800) for a timeout time duration (650).

12. A device (101, 102) comprising control circuitry (1011, 1015, 1021, 1025) configured to perform:
- downlink control signaling (6520) between a network (100, 101) and a terminal (102), said downlink control signaling (6520) comprising a control message (6010) indicative of activation or deactivation of early-data-transmission (6800) in a random access procedure (600) of the terminal (102),
wherein said downlink control signaling (6520) is transmitted in a one-to-one transmission,
wherein
the control message (6010) is a Layer 3 control message communicated upon release or reconfiguration of a user-plane data connection (160) between the terminal (102) and the network (100, 101), and
wherein the control message (6010) is indicative of a rule set for activation or deactivation of the early-data-transmission (6800); and
- in accordance with the rule set for activation or deactivation of the early-data-transmission (6800): selectively employing the early-data-transmission (6800).

13. The device (101, 102) of claim 12, wherein the control circuitry (1011, 1015, 1021, 1025) is configured to perform the method of any one of claims 2 to 11.

## Patentansprüche

1. Verfahren, umfassend:
- Downlink-Steuersignalisierung (6520) zwischen einem Netzwerk (100, 101) und einem Endgerät (102), die Downlink-Steuersignalisierung (6520) umfassend eine Steuernachricht (6010), die eine Aktivierung oder Deaktivierung einer frühen Datenübertragung (6800) in einer Direktzugriffsprozedur (600) des Endgeräts (102) angibt,
wobei die Downlink-Steuersignalisierung (6520) in einer Eins-zu-Eins-Übertragung übertragen wird, wobei
die Steuernachricht (6010) eine Schicht-3-Steuernachricht ist, die bei Freigabe oder Rekonfiguration einer Benutzerebenendatenverbindung (160) zwischen dem Endgerät (102) und dem Netzwerk (100, 101) übermittelt wird, und
wobei die Steuernachricht (6010) einen Regelsatz für die Aktivierung oder Deaktivierung der frühen Datenübertragung (6800) angibt; und
- gemäß dem Regelsatz für die Aktivierung oder Deaktivierung der frühen Datenübertragung (6800): selektives Verwenden der frühen Datenübertragung (6800).

2. Verfahren nach Anspruch 1,
wobei die Schicht 3-Steuernachricht eine RRC-Steuernachricht ist.

3. Verfahren nach Anspruch 1 oder 2,
wobei die Steuernachricht (6010) eine obligatorische frühe Datenübertragung (6800) mindestens für eine Timeout-Zeitdauer (650) auslöst.

4. Verfahren nach einem der Ansprüche 1 bis 3,
wobei die Steuernachricht (6010) eine Zugangsbeschränkung für einen Aufbau einer Benutzerebenendatenverbindung (160) zwischen dem Endgerät (102) und dem Netzwerk (100, 101) angibt.

5. Verfahren nach einem der vorstehenden Ansprüche,
wobei die Steuernachricht (6010) einen Regelsatz für die Aktivierung oder Deaktivierung der frühen Datenübertragung (6800) angibt, der von einer Kanalqualität abhängt.

6. Verfahren nach einem der vorstehenden Ansprüche,
wobei die Steuernachricht (6010) einen Regelsatz für die Aktivierung oder Deaktivierung der frühen Datenübertragung (6800) angibt, der von einer Abdeckungsverbesserungsstufe für wiederholte Datenübertragung abhängt.

7. Verfahren nach einem der vorstehenden Ansprüche,
wobei die Steuernachricht (6010) einen Regelsatz für die Aktivierung oder Deaktivierung der frühen Datenübertragung angibt, der von einer Menge von Uplink-Nutzlastdaten (6009) abhängt.

8. Verfahren nach einem der vorstehenden Ansprüche,
wobei die Steuernachricht (6010) mindestens eines von einer Schwellenwertanzahl und einer Schwellenwertrate der frühen Datenübertragung (6800) angibt.

9. Verfahren nach einem der vorstehenden Ansprüche,
wobei die frühe Datenübertragung (6800) eine Uplink-Anforderung (6101) für die Übertragung von Nutzlastdaten (6009) umfasst,
wobei die frühe Datenübertragung eine Downlink-Bestätigung (6102) der Uplink-Anforderung umfasst.

10. Verfahren nach einem der Ansprüche 1 bis 9,
wobei die Downlink-Steuersignalisierung (6520) endgerätespezifisch für das Endgerät (102) ist.

11. Verfahren nach den Ansprüchen 1 oder 2,
wobei die Steuernachricht (6010) die Aktivierung oder Deaktivierung der frühen Datenübertragung (6800) für eine Timeout-Zeitdauer (650) angibt.

12. Vorrichtung (101, 102), umfassend Steuerschaltkreise (1011, 1015, 1021, 1025), die konfiguriert sind, um durchzuführen:
- Downlink-Steuersignalisierung (6520) zwischen einem Netzwerk (100, 101) und einem Endgerät (102), die Downlink-Steuersignalisierung (6520) umfassend eine Steuernachricht (6010), die die Aktivierung oder Deaktivierung der frühen Datenübertragung (6800) in einer Direktzugriffsprozedur (600) des Endgeräts (102) angibt,
wobei die Downlink-Steuersignalisierung (6520) in einer Eins-zu-Eins-Übertragung übertragen wird, wobei
die Steuernachricht (6010) eine Schicht-3-Steuernachricht ist, die bei Freigabe oder Rekonfiguration einer Benutzerebenendatenverbindung (160) zwischen dem Endgerät (102) und dem Netzwerk (100, 101) übermittelt wird, und
wobei die Steuernachricht (6010) einen Regelsatz für die Aktivierung oder Deaktivierung der frühen Datenübertragung (6800) angibt; und
- gemäß dem Regelsatz für die Aktivierung oder Deaktivierung der frühen Datenübertragung (6800): selektives Verwenden der frühen Datenübertragung (6800).

13. Vorrichtung (101, 102) nach Anspruch 12, wobei die Steuerschaltkreise (1011, 1015, 1021, 1025) konfiguriert sind, um das Verfahren nach einem der Ansprüche 2 bis 11 durchzuführen.

## Revendications

1. Procédé, comprenant :
- une signalisation de commande de liaison descendante (6520) entre un réseau (100, 101) et un terminal (102), ladite signalisation de commande de liaison descendante (6520) comprenant un message de commande (6010) indicatif de l'activation ou de la désactivation d'une transmission précoce de données (6800) dans une procédure d'accès aléatoire (600) du terminal (102),
dans lequel ladite signalisation de commande de liaison descendante (6520) est transmise dans une transmission univoque, dans lequel
le message de commande (6010) est un message de commande de couche 3 communiqué lors de la libération ou de la reconfiguration d'une connexion de données de plan utilisateur (160) entre le terminal (102) et le réseau (100, 101), et
dans lequel le message de commande (6010) indique un ensemble de règles pour l'activation ou la désactivation de la transmission de données précoce (6800) ; et
- conformément à l'ensemble de règles pour l'activation ou la désactivation de la transmission de données précoce (6800) : l'emploi sélectif de la transmission de données précoce (6800).

2. Procédé selon la revendication 1,
dans lequel le message de commande de couche 3 est un message de commande RRC.

3. Procédé selon la revendication 1 ou 2,
dans lequel le message de commande (6010) déclenche une transmission de données précoce (6800) obligatoire au moins pendant une durée de temporisation (650).

4. Procédé selon l'une quelconque des revendications 1 à 3,
dans lequel le message de commande (6010) indique une restriction d'accès pour l'établissement d'une connexion de données de plan utilisateur (160) entre le terminal (102) et le réseau (100, 101).

5. Procédé selon l'une quelconque des revendications précédentes,
dans lequel le message de commande (6010) est indicatif d'un ensemble de règles pour l'activation ou la désactivation de la transmission de données précoce (6800) qui dépend d'une qualité de canal.

6. Procédé selon l'une quelconque des revendications précédentes,
dans lequel le message de commande (6010) indique un ensemble de règles pour l'activation ou la désactivation de la transmission de données précoce (6800) qui dépend d'un niveau d'amélioration de couverture pour une transmission répétitive de données.

7. Procédé selon l'une quelconque des revendications précédentes,
dans lequel le message de commande (6010) indique un ensemble de règles pour l'activation ou la désactivation de la transmission de données précoce qui dépend d'une quantité de données de charge utile de liaison montante (6009).

8. Procédé selon l'une quelconque des revendications précédentes,
dans lequel le message de commande (6010) indique au moins l'un d'un nombre seuil et d'un taux seuil de la transmission de données précoce (6800).

9. Procédé selon l'une quelconque des revendications précédentes,
dans lequel la transmission de données précoce (6800) comprend une demande de liaison montante (6101) pour la transmission de données de charge utile (6009),
dans lequel la transmission de données précoce comprend un accusé de réception de liaison descendante (6102) de la demande de liaison montante.

10. Procédé selon l'une quelconque des revendications 1 à 9,
dans lequel ladite signalisation de commande de liaison descendante (6520) est spécifique au terminal pour le terminal (102).

11. Procédé selon les revendications 1 ou 2,
dans lequel le message de commande (6 010) indique l'activation ou la désactivation de la transmission de données précoce (6 800) pour une durée de temporisation (650).

12. Dispositif (101, 102) comprenant un ensemble de circuits de commande (1011, 1015, 1021, 1025) configuré pour effectuer :
- une signalisation de commande de liaison descendante (6520) entre un réseau (100, 101) et un terminal (102), ladite signalisation de commande de liaison descendante (6520) comprenant un message de commande (6010) indicatif de l'activation ou de la désactivation d'une transmission de données précoce (6800) dans une procédure d'accès aléatoire (600) du terminal (102),
dans lequel ladite signalisation de commande de liaison descendante (6520) est transmise dans une transmission univoque, dans lequel
le message de commande (6010) est un message de commande de couche 3 communiqué lors de la libération ou de la reconfiguration d'une connexion de données de plan utilisateur (160) entre le terminal (102) et le réseau (100, 101), et
dans lequel le message de commande (6010) indique un ensemble de règles pour l'activation ou la désactivation de la transmission de données précoce (6800) ; et
- conformément à l'ensemble de règles pour l'activation ou la désactivation de la transmission de données précoce (6800) : l'emploi sélectif de la transmission de données précoce (6800).

13. Dispositif (101, 102) selon la revendication 12, dans lequel l'ensemble de circuits de commande (1011, 1015, 1021, 1025) est configuré pour effectuer le procédé selon l'une quelconque des revendications 2 à 11.
